# EUROPEAN PATENT APPLICATION

(11) **EP 4 613 705 A1**
(43) Date of publication of application: **10.09.2025**
(21) Application number: 23912511.5
(22) Date of filing: 27.10.2023
(51) Int. Cl.: C01B 32/174, H01M 4/62

(54) **CARBON NANOTUBE DISPERSION SOLUTION, SLURRY FOR MANUFACTURING ELECTRODE, AND SECONDARY BATTERY**

(30) Priority: 28.12.2022 KR 20220186575
(71) Applicant: Dongjin Semichem Co., Ltd., Incheon 22824 (KR)
(72) Inventor: JEON, Seung Hun, Hwaseong-si, Gyeonggi-do 18635 (KR); KIM, Yoo Seong, Hwaseong-si, Gyeonggi-do 18635 (KR); KIM, Hyo Sun, Hwaseong-si, Gyeonggi-do 18635 (KR); KIM, Dong Young, Hwaseong-si, Gyeonggi-do 18635 (KR); KIM, Seong Do, Hwaseong-si, Gyeonggi-do 18635 (KR); KIM, Dong Ho, Hwaseong-si, Gyeonggi-do 18635 (KR); YOON, Sung Sin, Hwaseong-si, Gyeonggi-do 18635 (KR); KIM, Tae Yoon, Hwaseong-si, Gyeonggi-do 18635 (KR); CHO, Hyun Il, Hwaseong-si, Gyeonggi-do 18635 (KR)
(74) Representative: Grünecker Patent- und Rechtsanwälte PartG mbB
(86) International application number: PCT/KR2023/016819
(87) International publication number: WO 2024/143831

(57) **Abstract**

The present invention relates to: a carbon nanotube dispersion solution; a slurry for manufacturing an electrode, containing carbon nanotubes; and a secondary battery. The performance of a secondary battery comprising carbon nanotubes can be improved by controlling the particle size and amount of the carbon nanotubes.

## Description

### Technical Field

The present invention relates to a dispersion of carbon nanotubes, a slurry for electrode fabrication containing carbon nanotubes, and a secondary battery.

### Background Art

With the rapid development of the electronics, communications, and computer industries, electric vehicles, mobile phones, laptop computers, and the like have made remarkable progress, and batteries with high energy density and stable output have been required as a power source to drive portable electronic devices. In particular, lithium secondary batteries are high-performance batteries having the highest energy density among currently commercialized secondary batteries and have been most actively developed.

A conductive material is a material that is used to facilitate the transfer of electrons between electrode active materials or between an electrode active material and a current collector. These conductive materials have been developed mainly using carbon-based materials. Conductive material slurries are solutions in which such conductive materials are dispersed in solvents, and in the future, they will become materials that form electrode slurries together with electrode active materials and binders. Their importance has been growing as secondary batteries have recently entered the market of medium and large batteries markets such as electric vehicles and energy storage systems (ESS), and studies have been continuously conducted to increase theoretical capacity.

Carbon nanotubes (CNTs) as a conductive material can increase energy density and extend lifespan compared to conventional powdered carbon, and can also the reduce battery size. In particular, these advantages can act as greater advantages in electric vehicle batteries that require high capacity, rapid charging and discharging, etc. However, despite their outstanding advantages, carbon nanotubes have strong hydrophobicity and an entangled tubular structure, and thus in order to utilize their various advantages, a method for dispersing or processing carbon nanotubes should first be developed. In addition, many battery manufacturers are demanding a conductive material dispersion with low viscosity and high conductive material content as a conductive material dispersion for a secondary battery, but as the content of carbon nanotubes increases, the dispersibility in the dispersion decreases. This decrease in dispersibility leads to non-uniform coating and high viscosity, which may result in poor electrode coating.

Therefore, there is a need for a method of producing a carbon nanotube dispersion having low viscosity and a high carbon nanotube content.

### DISCLOSURE

### Technical Problem

An object of the present invention is to provide a dispersion of carbon nanotubes capable of providing excellent electrical performance such as high conductivity to an electrode while having low viscosity by controlling the amount of fine (small) particles during processing of carbon nanotubes, a slurry for electrode fabrication containing the carbon nanotubes, and an electrode and secondary battery fabricated therefrom.

### Technical Solution

In the present invention, it has been found that, as the size of small particles of carbon nanotubes in a dispersion containing carbon nanotubes decreases and the amount of the small particles increases, the performance of a battery including an electrode fabricated using the dispersion may be reduced. As a result of conducting extensive studies to solve this problem, it has been discovered that the size and amount of small particles corresponding to D5 of the particle size distribution of carbon nanotubes have a direct correlation with the performance of the battery. Accordingly, in the present invention, the D5 particle size was controlled to be 7 µm or more, and as a result, the performance of a battery including an electrode fabricated using the dispersion could be improved.

Therefore, according to one aspect of the present invention, there is provided a dispersion of carbon nanotubes in which the carbon nanotubes have a D5 particle size of 7 µm or more.

According to one embodiment, the D5 particle size may be specifically 7 µm to 14 µm, 7 µm to 9 µm, 7.5 µm to 14 µm, or 7.5 µm to 9 µm. The D5 may be measured using a particle size analyzer and means the particle size value when the cumulative volume density from a sample with the smallest particle size reaches 5 volume density%. According to the present invention, by controlling the particle size in the D5 particle size of carbon nanotubes to be 7 µm or more, it is possible to contribute to improving not only the electrical properties such as powder conductivity of the carbon nanotubes but also the performance of a battery including an electrode fabricated using the dispersion.

In addition, according to another embodiment of the present invention, the carbon nanotubes may have a D50 particle size of 15 to 50 µm, 20 to 45 µm, 20 to 40 µm, or 25 to 35 µm. In addition, according to another embodiment of the present invention, the carbon nanotubes may have a D90 particle size of 45 to 200 µm, specifically, 45 to 100 µm, 45 to 95 µm, 45 to 90 µm, 45 to 85 µm, or 50 to 80 µm. Within the controlled range, the median particle size (D50) and the large particle size (D90) alone are not directly related to the performance of the battery, but the quality of the carbon nanotube powder may be improved by controlling both the median particle size and the large particle size while satisfying the aforementioned D5 particle size.

According to one embodiment of the present invention, the content of carbon nanotubes having a particle size of 17.4 µm or less in the carbon nanotubes may be 30% by volume or less based on the total volume of the carbon nanotubes. According to the present invention, by controlling the content of carbon nanotubes having a particle size of 17.4 µm or less to be 30% or less, it is possible to contribute to improving not only the electrical properties of carbon nanotubes such as powder conductivity but also the performance of a battery including an electrode fabricated using the carbon nanotubes. The content of carbon nanotubes having a particle size of 17.4 µm or less may be, for example, 6 to 30 vol%, 7 to 30 vol%, or 7 to 27 vol%, and when the above range is satisfied, a carbon nanotube dispersion satisfying both low viscosity and high conductivity may be provided.

The carbon nanotube may be at least one selected from the group consisting of a single-walled carbon nanotube, a double-walled carbon nanotube, a triple-walled carbon nanotube, and a multi-walled carbon nanotube. The type of carbon nanotube may be appropriately selected as needed. Since the carbon nanotubes may be used as a conductive material for a secondary battery, single-walled carbon nanotubes are advantageous in terms of conductivity. However, the single-walled carbon nanotubes have disadvantages in that since they require a high-temperature synthesis process compared to multi-walled carbon nanotube, it is difficult to control the process, and the cost increases significantly due to the removal of metal impurities. Accordingly, according to one embodiment of the present invention, the carbon nanotubes may be a mixture of single-walled carbon nanotubes and double-walled carbon nanotubes, triple-walled carbon nanotubes, or multi-walled carbon nanotubes, or may be double-walled carbon nanotubes, triple-walled carbon nanotubes, or multi-walled carbon nanotubes.

According to one embodiment, the multi-walled carbon nanotube may be a carbon nanotube having 30 walls or less, 20 walls or less, 10 walls or less, or 4 to 30 walls. The walls can be confirmed in a TEM image, and the number of walls can be determined by directly counting them in the TEM image. Carbon nanotubes, which have a small number of walls and in which the wall is not broken in the middle and there is no complex path formed by connection to other walls, are preferable in terms of electrical conductivity.

According to one embodiment of the present invention, the carbon nanotube may have a central diameter of 4 to 50 nm, specifically, 4 to 30 nm. For example, the carbon nanotube may be a triple-walled or multi-walled carbon nanotube having a central diameter of 4 to 20 nm, and when the carbon nanotube is used, it may provide an electrode having excellent electrical performance. The central diameter is the sum of the core diameter of the carbon nanotube and the number of walls. Here, the number of walls is not the same in all parts, and thus the central diameter is the diameter that accounts for the majority. The central diameter may be directly measured from a TEM image. However, since there may be deviation depending on the measurement location within the sample, the central diameter may be a value obtained by statistically analyzing the values measured at multiple measurement locations within the sample. In addition, the central diameter may be estimated by measuring the core diameter, counting the number of walls, and measuring the spacing between the walls. For example, in the case of a carbon nanotube having a central diameter of 30.5 nm actually measured from a TEM image, the central diameter of 30.5 nm may be calculated from a measured core diameter of 10 nm, a number of walls of 30, and a spacing between walls of 3.4 Å.

According to one embodiment of the present invention, the carbon nanotubes may be of an entangled type or a bundle type. The bundle type is one in which the carbon nanotube units are aligned and bundled, and is advantageous for strand-by-strand dispersion. Accordingly, according to one embodiment, the carbon nanotubes may be of a bundle type. In the dispersion of the present invention, the bundle-type carbon nanotubes may exist in a form in which at least some of the long carbon nanotube strands of the bundle are released during the dispersion process.

According to one embodiment of the present invention, the carbon nanotubes may contain a metal catalyst used for carbon nanotube synthesis, such as iron (Fe), cobalt (Co), aluminum (Al), or nickel (Ni), and the amount of the metal catalyst in the carbon nanotubes may be as small as possible, for example, 2.5 wt% or less, specifically, 2.1 wt% or less. The content of the metal may be measured by ICP after dispersing the carbon nanotubes in an acid solution and dissolving the metal using high-temperature microwaves, etc.

The dispersion of carbon nanotubes may further contain a dispersion medium. The dispersion medium may include one or two or more selected from N,N-dimethylformamide (DMF), N-methylpyrrolidone (NMP), dimethylacetamide (DMAc), dimethyl sulfoxide (DMSO), methanol, ethanol, propanol, isopropyl alcohol, butanol, isobutanol, acetone, tetrahydrofuran (THF), water, etc., without being necessarily limited thereto.

According to one embodiment of the present invention, the dispersion of carbon nanotubes of the present invention may have a solid content of 5% or more. In addition, according to another embodiment, the dispersion containing the carbon nanotube of the present invention may have a viscosity of 2,000 cp or less, or 1,000 cp or less, at a shear rate of 50/s. According to another embodiment, the carbon nanotubes may have a powder conductivity of 50 S/cm or more. According to the present invention, by controlling the D5 particle size, the dispersion with a high solid content of 5% or more may have low viscosity and high powder conductivity, and accordingly, an electrode fabricated using the carbon nanotubes of the present invention or a dispersion thereof or a slurry thereof and a secondary battery including the same may exhibit excellent electrical performance.

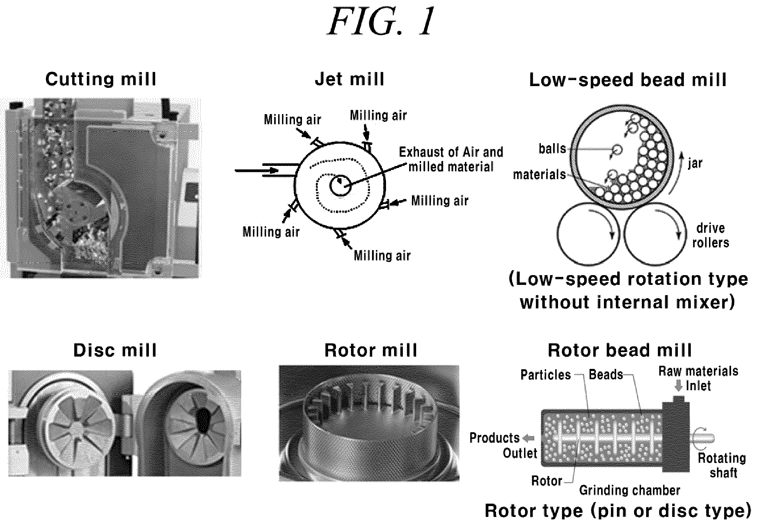

Carbon nanotubes satisfying the condition of D5 particle size according to the present invention may be produced by controlling a processing device, processing conditions, etc. for grinding carbon nanotubes. The type of processing device that may be used for grinding carbon nanotubes is not particularly limited as long as the carbon nanotubes of the present invention may be produced by controlling the processing conditions, etc. For example, various processing devices as shown in FIG. 1 may be used. According to one embodiment, the carbon nanotubes of the present invention may be produced using a low-speed bead mill, specifically a rotary bead mill that rotates at a low speed, for example, 20 to 200 rpm, 20 to 100 rpm, or 20 to 50 rpm. According to one embodiment of the present invention, the carbon nanotubes of the present invention may be produced using a rotary bead mill that does not have an internal mixer, preferably a rotary bead mill that rotates at a low speed and does not have an internal mixer. Instead of the low-speed bead mill, a rotor type bead mill (additionally classified into pins, disks, etc. depending on the type of rotor) and a vibration ball mill, which are improved versions of the bead mill, may be used. However, the rotor type bead mill has a disadvantage in that it is difficult to control the generation of fine particles because the beads between the rotors move rapidly while the rotors inside the cylinder rotates.

According to one embodiment of the present invention, the carbon nanotubes may be processed into powder by a dry method.

Meanwhile, processing conditions for milling the carbon nanotubes, specifically, bead filling rate, grinding strength, grinding time, bead size, etc., may be appropriately adjusted by those skilled in the art as needed.

Specifically, when the carbon nanotubes are processed using a bead mill, the processing may vary depending on the size of the beads, the volume of the container, etc., but may be performed at a filling rate of 30 to 90% or 60 to 90%. In the above filling rate range, the amount of beads is sufficient and the movement of the beads is not restricted, and thus the processing effect may be excellent.

In addition, the processing of the carbon nanotubes may be performed at 10 to 100 rpm, or 20 to 50 rpm. In the above rpm range, the processing effect may be excellent.

In addition, the processing of the carbon nanotubes may be performed using one type of beads or a mixture of two or more types of beads. When the processing is performed using one type of beads, the diameter of the beads may be greater than 2 mm, or 2 to 5 mm. According to one embodiment, the processing may be performed in a bead mill using beads having a diameter of 5 mm. When the diameter of the one type of beads is 2 to 5 mm, the grinding effect may be excellent, and when a mixture of two or more types of beads is used, the grinding effect may be further increased. An example of the mixture of two or more types of beads may include a mixture of beads having a diameter of 5 mm and beads having a diameter of 2 mm. The ratio between beads of different diameters in the mixture of beads may be appropriately adjusted by those skilled in the art in consideration of the grinding strength, etc. For example, when mild grinding is performed in a low-speed bead mill, beads with a diameter of 5 mm may be used in larger amounts than beads with a diameter of 2 mm.

The grinding time may be 20 hours or less, for example 14 hours or less, without being limited thereto, and may be appropriately adjusted depending on the type of beads used, the state of the carbon nanotube raw material, etc.

According to another aspect of the present invention, there is provided a slurry for electrode fabrication containing carbon nanotubes having a D5 particle size of 7 µm or more. For details on the carbon nanotubes, including the D5, reference is made to the above description.

The slurry for electrode fabrication may further contain, in addition to the carbon nanotubes, at least one selected from among a conductive material, an electrode active material, and a binder.

The conductive material refers to a conductive material that is further added in addition to the carbon nanotubes. The conductive material may be one or two or more selected from nonlinear carbon conductive materials, for example, dot-type carbon black, low structure carbon black (LSCB), medium structure carbon black (MSCB), metal powder, metal fiber, Denka black, polyaniline, polythiophene, polypyrrole, acetylene, etc., without being necessarily limited thereto, and may be any conductive material known in the art that may be used for electrode fabrication together with carbon nanotubes.

The binder may be one or two or more selected from polyvinylpyrrolidone, polyvinylidene fluoride (PVdF), polyvinylidene fluoride copolymer, chlorotrifluoroethylene (CTFE), polyvinyl alcohol, carboxymethyl cellulose (CMC), hydroxypropyl cellulose, starch, styrene butadiene rubber, nitrile rubber, etc., without being necessarily limited thereto, and any binder known in the art may be used. Polyvinylidene fluoride (PVdF) is a binder commonly used in electrode fabrication because it is soluble in a wide range of solvents, has high electrochemical durability, and exhibits a low level of swelling. The binder may have a molecular weight ranging from 500,000 to 1,200,000 g/mol.

The electrode active material may be a cathode (positive electrode) active material. Examples of the cathode active material that may be used include lithium cobalt oxide (LiCoO₂), lithium nickel oxide (LiNiO₂), lithium manganese oxides (LiMnO₂, LiMnO₃, and LiMn₂O₃), lithium vanadium oxides (LiV₃O₄, LiV₃O₈, V₂O₅, etc.), lithium copper oxide (Li₂CuO₂), lithium manganese composite oxides, lithium sulfide, etc., without being necessarily limited thereto, and any active material known in the art may be used. For example, the electrode active material may be a cathode active material selected from the group consisting of Liₓ₁NiO₂ (0.5<x1<1.3), Liₓ₂(Niₐ₁Co_{b1}Mn_{c1})O₂ (0.5<x2<1.3, 0<a1<1, 0<b1<1, 0<c1<1, a1+b1+c1=1), Liₓ₃Ni_{1-y1}Co_{y1}O₂ (0.5<x3<1.3, 0<y1<1), Liₓ₄Ni_{1-y2}Mn_{y2}O₂ (0.5<x4<1.3, 0≤y2<1), Liₓ₅(Niₐ₂Co_{b2}Mn_{c2})O₄ (0.5<x5<1.3, 0<a2<2, 0<b2<2, 0<c2<2, a2+b2+c2=2), and Liₓ₆Mn_{2-z1}Ni_{z1}O₄ (0.5<x6<1.3, 0<z1<2).

According to another aspect of the present invention, there is provided a secondary battery including the above-described slurry for electrode fabrication. Here, "secondary battery including the slurry for electrode fabrication" means that the secondary battery includes components contained in the slurry because it is manufactured using the slurry for electrode fabrication.

The secondary battery may include a cathode (positive electrode), an anode (negative electrode), and an electrolyte, and at least one of the cathode and the anode may be fabricated using the slurry for electrode fabrication containing the carbon nanotubes. The secondary battery may be a lithium secondary battery. In addition, the secondary battery may be a cylindrical, prismatic, or pouch-shaped secondary battery, but is not particularly limited as long as it corresponds to a charge/discharge device.

The secondary battery may have a direct current internal resistance (DCIR) value of 10 Ω or less. Here, the DCIR value may be a value measured in an electrode fabricated by mixing a lithium manganese composite oxide active material as used in the following example of the present invention with the carbon nanotubes according to the present invention and a binder.

According to another aspect of the present invention, there may be provided a battery module including the secondary battery as a unit cell and a battery pack including the same. The battery pack may be used, for example, as a power source for at least one medium- or large-sized device selected from the group consisting of: a power tool; electric vehicles, including an electric vehicle (EV), a hybrid electric vehicle (HEV), and a plug-in hybrid electric vehicle (PHEV); and a power storage system.

### Advantageous Effects

According to the embodiments, it is possible to provide a dispersion of carbon nanotubes capable of providing excellent electrical performance, such as high conductivity to an electrode while having low viscosity by controlling the amount of small particles during processing of carbon nanotubes.

According to the present invention, control of the size and amount of small particles of the carbon nanotubes may be achieved through a low-speed dry powder processing method as a technology for processing carbon nanotubes into powder. According to the low-speed dry powder processing method, not only it is possible not only to control the size and amount of small particles as described above, but also to provide a low-viscosity slurry with a high carbon nanotube content while reducing damage to carbon nanotubes that occurs during processing.

### Brief Description of Drawings

FIG. 1 shows schematic views or photographs of various processing devices that may be used for processing carbon nanotubes.
FIG. 2 graphically shows the change in powder conductivity or slurry sheet resistance depending on the small particle size (D5) and the amount of small particles (17.4 µm or less) according to Experimental Example 3, and also graphically shows the change in the direct current internal resistance (DCIR) value depending on the obtained slurry sheet resistance.
FIG. 3 graphically shows the change in powder conductivity depending on D50 and D90 particle sizes according to Experimental Example 4.

### Mode for Invention

Hereinafter, the invention will be described in more detail with reference to preferred examples to help understand the present invention. The following examples are provided to illustrate the invention, and thus the scope of the present invention is not limited thereto.

### [Examples and Comparative Examples]

### 1. Processing of Carbon Nanotubes

Multi-walled carbon nanotubes (10 walls, bundle type, and 10 nm central diameter) were dry processed under different conditions depending on the processing device. The types of processing devices (low-speed bead mill, cutting mill, and rotor bead mill) and processing conditions (time, rpm, bead size, etc.) used in each of Comparative Examples and Example are described in Table 1 below. In addition, FIG. 1 shows schematic views and photographs of the low-speed bead mill used in the Examples according to the present invention and various processing devices that may be used in Comparative Examples.

### 2. Preparation of Dispersion of Carbon Nanotubes

The carbon nanotube powder was added to a solution of polyvinylpyrrolidone (PVP, molecular weight: 40,000 to 80,000 g/mol) in N-methylpyrrolidone according to each content and mixed using a homomixer, thereby preparing dispersion compositions.

### 3. Fabrication of Cathode

A slurry was prepared by mixing a cathode active material NCM811 [layered compound represented by the composition formula Li₁(Ni_{0.8}Co_{0.1}Mn_{0.1})O₂], a conductive material [the produced carbon nanotubes], and a binder [PVDF, molecular weight: 60,000 Da] at a ratio of 98:1:1. Then, the slurry was applied to an aluminum foil current collector using a coater and dried, thereby fabricating a cathode.

### 4. Manufacture of Secondary Battery

A coin cell was manufactured using LiPF₆ at a concentration of about 1.2 M in ethylene carbonate and dimethyl carbonate (3:7 ratio) as an electrolyte, the above fabricated cathode as a cathode, and a lithium electrode as a counter electrode.

### [Analysis Conditions]

The following analysis was performed on the carbon nanotube powder obtained by the above-described processing, the dispersion containing the carbon nanotubes, or the secondary battery.

### 1. Viscosity

The viscosities of the prepared dispersions were measured at 23°C and 50 s⁻¹ using a Haake Viscometer (Plate Φ35 mm).

### 2. Powder Conductivity

The powder conductivity of the carbon nanotubes dry-processed by the processing device such as a low-speed bead mill was measured. The powder conductivity was determined by measuring the resistance value using a powder resistance meter (model HPRM, Han Tech Co., Ltd.) in the range of applied pressure (200 to 2,000 kgf/cm²) and comparing the resistance value based on a density of 0.8 g/cc.

### 3. Particle Size Distribution

After diluting the dispersion of the dry-processed carbon nanotubes, the particle size distribution was measured using a particle size analyzer (Malvern Mastersizer 2000).

### 4. Sheet Resistance

The dispersion containing the carbon nanotubes was applied onto a PET film using a bar coater and dried at 120°C, and the sheet resistance was measured using a 4-point probe (MCP-T610, Mitsubishi Chemical Analytech Co. Ltd.).

### 5. DCIR

The coin cell type secondary battery was charged and discharged at a constant C-rate, and the DCIR value was measured.

### [Experimental Example 1] Comparison According to Methods for Processing Carbon Nanotubes

As described above, the characteristics of carbon nanotubes, obtained by dry processing multi-walled carbon nanotubes under different conditions depending on the processing device, and dispersions thereof were measured, and the results are shown in Table 1 below.

**[Table 1]**

| | Conditions | Detailed conditions | Solid content | Viscosity (cp) at 50/s | D5 (µm) | Powder conductivity (S/cm) |
|---|---|---|---|---|---|---|
| Reference Example 1 | Applied without grinding | - | 4% | 2163 | 17.4 | 67.74 |
| Reference Example 2 | | - | 5% | Dispersed, Non-uniform | 18.2 | 67.74 |
| Example 1 | Low-speed bead mill | Bead size: 5 mm | 8% | 981 | 8.73 | 53.06 |
| Comparative Example 1 | | Bead size: 2 mm | 8% | 552 | 4.23 | 37.20 |
| | Time: 10 hr | | | | | |
| | Filling rate: 85% | | | | | |
| | RPM: 30 | | | | | |
| Comparative Example 2 | Cutting mill | RPM: 2500, Mesh sieve: 0.5 mm | 8% | 258 | 3.56 | 30.90 |
| Comparative Example 3 | | RPM: 1500, Mesh sieve: 1.0 mm | 8% | 527 | 4.15 | 38.11 |
| Comparative Example 4 | | RPM: 2500, Mesh sieve: 1.0 mm | 8% | 332 | 3.69 | 31.22 |
| Comparative Example 5 | Rotor bead mill | RPM: 900, Bead size: 2 mm, 1 Pass | 7% | 382 | 3.78 | 35.36 |
| Comparative Example 6 | | RPM: 600, Bead size: 2 mm, 1 Pass | 7% | 631 | 4.51 | 45.10 |
| Comparative Example 7 | | RPM: 600, Bead size: 2 mm, 2 Passes | 7% | 348 | 3.58 | 36.10 |

From Table 1 above, it could be confirmed that Comparative Examples 1 to 7 having a D5 particle size of less than 7 µm had lower powder conductivity than Example 1 having a D5 particle size of 7 µm or more, which means that the electrical properties deteriorated. In particular, Example 1 satisfying a D5 particle size of 7 µm to 14 µm could exhibit not only high powder conductivity but also low viscosity, thereby enabling uniform coating properties to be achieved during electrode fabrication.

### [Experimental Example 2] Comparison According to Bead Mill Conditions

Based on the conditions of Example 1, the powder conductivities of the powders processed under different bead mill conditions (time, filling rate, RPM, and bead mixing) and the particle sizes and viscosities of the dispersions prepared using the processed powders were compared, and the results are shown in Table 2 below.

**[Table 2]**

| | | Grinding time | Solid content | Viscosity (cp) at 50/s | Small particle size D5 (µm) | Amount (%) of small particles (17.4 µm or less) | Powder conductivity (S/cm) |
|---|---|---|---|---|---|---|---|
| Comparison according to grinding time | Reference Example 1 | Before grinding | 4% | 2163 | 17.4 | 5.56 | 67.74 |
| | Example 2 | 5 hr | 5% | 1960 | 13.9 | 7.27 | 58.42 |
| | Example 1 | 10 hr | 8% | 981 | 8.73 | 20.90 | 53.06 |
| | Example 3 | 11 hr | 8% | 982 | 7.90 | 25.48 | 53.10 |
| Filling rate: 85% | Example 4 | 12 hr | 8% | 972 | 7.67 | 26.81 | 51.72 |
| RPM: 30 | Comparative Example 8 | 14 hr | 8% | 712 | 6.37 | 30.05 | 43.10 |
| Bead size: 5 mm | | | | | | | |
| | Comparative Example 9 | 16 hr | 8% | 687 | 5.46 | 34.60 | 42.39 |
| | Comparative Example 10 | 20 hr | 8% | 218 | 4.78 | 31.45 | 35.91 |
| Filling rate change (60%) | Comparative Example 11 | 14 hr | 8% | 842 | 6.33 | 28.43 | 46.14 |
| RPM change (20 RPM) | Comparative Example 12 | 14 hr | 8% | 912 | 6.35 | 27.55 | 47.58 |
| Bead mixing (5 mm + 2 mm) | Comparative Example 13 | 10 hr | 8% | 357 | 5.06 | 33.20 | 41.50 |
| 60%, 20 RPM, 5 mm + 2 mm | Example 5 | 10 hr | 8% | 765 | 7.13 | 30.80 | 48.15 |
| Reproduction of Example 1 | Example 6 | 10 hr | 8% | 663 | 8.23 | 20.71 | 54.26 |

From Table 2 above, it could be seen that the D5 particle size condition according to the present invention could be controlled depending on the grinding time. It could be confirmed that, in the case of Comparative Examples 11 and 12 performed under milder conditions than Comparative Example 8, the amount of small particles decreased, but the powder conductivity was low because D5 still did not satisfy 7 µm or more, and furthermore, the processed state of the powder was also non-uniform. It could be confirmed that, in the case of Example 5 in which a mixture of two types of beads was used, the D5 particle size condition could be achieved by changing conditions (bead conditions) other than the grinding time. In addition, as can be seen from the results of Example 6 performed to reproduce Example 1, the results of Example 1 were reproducible.

### [Experimental Example 3] Examination of Relationship between Size and Amount of Small Particles and Battery Performance

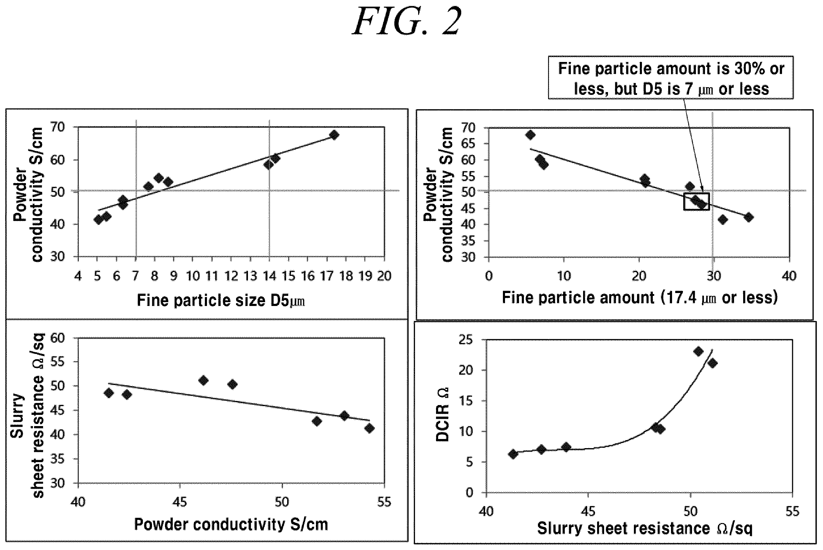

The battery performance depending on the small particle size D5 and the amount of small particles was evaluated. To this end, cathodes were fabricated using carbon nanotubes and a cathode active material as described above, and secondary batteries were manufactured using the cathodes. The powder conductivity, the sheet resistance of the dispersion, and the DCIR were measured, and the results are shown in Table 3 below and FIG. 2.

**[Table 3]**

| | Solid content | Viscosity (cp) at 50/s | Small particle size D5 (µm) | Amount (%) of small particles (17.4 µm or less) | Powder conductivity (S/cm) | Dispersion sheet resistance (Ω/sq) (thickness: 9-10 µm) | DCIR (cell internal resistance) (Ω) |
|---|---|---|---|---|---|---|---|
| Example 1 | 8% | 981 | 8.73 | 20.90 | 53.06 | 43.9 | 7.405 |
| Example 4 | 8% | 972 | 7.67 | 26.81 | 51.72 | 42.7 | 7.075 |
| Comparative Example 9 | 8% | 687 | 5.46 | 34.60 | 42.39 | 48.3 | 10.675 |
| Comparative Example 11 | 8% | 842 | 6.33 | 28.43 | 46.14 | 51.1 | 21.139 |
| Comparative Example 12 | 8% | 912 | 6.35 | 27.55 | 47.58 | 50.4 | 23.11 |
| Comparative Example 13 | 8% | 357 | 5.06 | 33.20 | 41.50 | 48.5 | 10.423 |
| Example 6 | 8% | 663 | 8.23 | 20.71 | 54.26 | 41.3 | 6.210 |

From Table 3 above and FIG. 2, it could be confirmed that the D5 particle size and the amount of small particles (content of particles with a particle size of 17.4 µm or less) affected the powder conductivity, and the powder conductivity affected the sheet resistance of the dispersion, thereby causing a difference in the performance of the final battery. That is, it could be seen that the D5 particle size and the amount of small particles (content of particles with a particle size of 17.4 µm or less) were directly related to the battery performance. In particular, it could be confirmed that, when the D5 particle size satisfied 7 µm or more and the content of carbon nanotubes with a particle size of 17.4 µm or less satisfied 30 volume% or less, the dispersion could exhibit low sheet resistance and low DCIR.

### [Experimental Example 4] Examination of Relationship between Size and Amount of Small Particles and Battery Performance

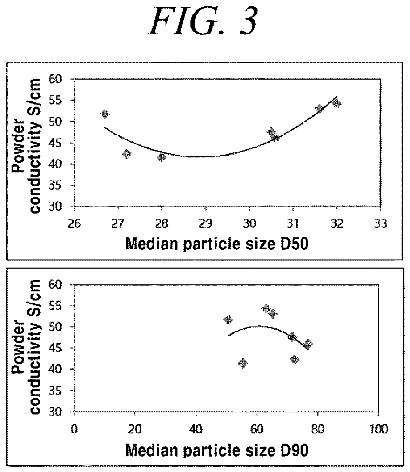

The relationship between the median particle size (D50) and large particle size (D90) of the particle size distribution and the powder conductivity was examined in the same manner as in Experimental Example 3, and the results are shown in Tables 4 and 5 below and FIG. 3.

**[Table 4]**

| | Grinding conditions | Small particle size D5 (µm) | Median particle size D50 (µm) | Large particle size D90 (µm) | Powder conductivity (S/cm) |
|---|---|---|---|---|---|
| Reference Example 1 | Before grinding | 17.4 | 160 | 785 | 67.74 |
| Example 1 | 10 hr | 8.73 | 31.6 | 65.2 | 53.06 |
| Example 4 | 12 hr | 7.67 | 26.7 | 50.7 | 51.72 |
| Comparative Example 9 | 16 hr | 5.46 | 27.2 | 72.3 | 42.39 |
| Comparative Example 11 | 14 hr | 6.33 | 30.6 | 77 | 46.14 |
| Comparative Example 12 | 14 hr | 6.35 | 30.5 | 71.6 | 47.58 |
| Comparative Example 13 | 10 hr | 5.06 | 28.0 | 55.3 | 41.50 |
| Example 6 | 10 hr | 8.23 | 32.1 | 63 | 54.26 |

**[Table 5]**

| | Conditions | Solid content | Viscosity (cp) at 50/s | Small particle size D5 (µm) | Median particle size D50 (µm) | Large particle size D90 (µm) | Powder conductivity (S/cm) |
|---|---|---|---|---|---|---|---|
| Comparative Example 2 | Cutting mill | 8% | 258 | 3.56 | 18.70 | 51.93 | 30.90 |
| Comparative Example 2-1 | Comparative Example 2 twice | 8% | 132 | 2.76 | 14.49 | 40.23 | 20.66 |
| Comparative Example 1 | Bead size: 2 mm 10 hr | 8% | 552 | 4.23 | 21.07 | 58.50 | 37.20 |
| Comparative Example 1-1 | 14 hr in Comparative Example 1 | 8% | 337 | 3.73 | 18.54 | 47.21 | 32.56 |

From Tables 4 and 5 above and FIG. 3, it could be confirmed that the median particle size (D50) and the large particle size (D90) did not affect the powder conductivity. In addition, it could be confirmed that, even when the grinding conditions were changed as in Comparative Example 2-1 and Comparative Example 1-1, high conductivity was not exhibited when D5 did not satisfy 7 µm or more.

Although the present invention has been described above with reference to preferred embodiments thereof, it will be understood by those skilled in the art that the present invention may be variously modified and changed without departing from the spirit and scope of the present invention as set forth in the appended claims.

## Claims

1. A dispersion of carbon nanotubes in which the carbon nanotubes have a D5 particle size of 7 µm or more.

2. The dispersion of carbon nanotubes according to claim 1, wherein the carbon nanotubes include 30% by volume or less of carbon nanotubes having a particle size of 17.4 µm or less, based on the total volume of the carbon nanotubes.

3. The dispersion of carbon nanotubes according to claim 1, which has a solid content of 5% or more.

4. The dispersion of carbon nanotubes according to claim 1, which has a viscosity of 2,000 cp or less at a shear rate of 50/s.

5. The dispersion of carbon nanotubes according to claim 1, wherein the D5 particle size is 7 µm to 14 µm.

6. The dispersion of carbon nanotubes according to claim 5, wherein the D5 particle size is 7 µm to 9 µm.

7. The dispersion of carbon nanotubes according to claim 1, wherein the carbon nanotubes have a D50 particle size of 15 µm to 50 µm.

8. The dispersion of carbon nanotubes according to claim 1, wherein the carbon nanotubes have a D90 particle size of 45 to 200 µm.

9. The dispersion of carbon nanotubes according to claim 1, wherein the carbon nanotubes have a powder conductivity of 50 S/cm or more.

10. The dispersion of carbon nanotubes according to claim 1, wherein the carbon nanotube is at least one selected from the group consisting of a single-walled carbon nanotube, a double-walled carbon nanotube, a triple-walled carbon nanotube, and a multi-walled carbon nanotube.

11. The dispersion of carbon nanotubes according to claim 1, wherein the carbon nanotube has a central diameter of 4 to 50 nm.

12. A slurry for electrode fabrication containing carbon nanotubes having a D5 particle size of 7 µm or more.

13. The slurry for electrode fabrication according to claim 12, further containing, in addition to the carbon nanotubes, at least one selected from among a conductive material, an electrode active material, and a binder.

14. A secondary battery comprising the slurry for electrode fabrication set forth in claim 13.
